# FASCICULE DE BREVET EUROPEEN

(11) **EP 2 401 240 B1**
(45) Date de publication et mention de la délivrance du brevet: **03.09.2014**
(21) Numéro de dépôt: 10705149.2
(22) Date de dépôt: 19.02.2010
(51) Int. Cl.: C04B 26/02, C04B 28/02

(54) **COMPOSITION SECHE COMPRENANT UN LIANT ET UNE HUILE VEGETALE MODIFIEE**
TROCKENE ZUSAMMENSETZUNG, UMFASSEND EIN BINDEMITTEL UND EIN MODIFIZIERTES PFLANZENÖL
DRY COMPOSITION COMPRISING A BINDER AND A MODIFIED VEGETABLE OIL

(30) Priorité: 26.02.2009 FR 0900885
(43) Date de publication de la demande: 04.01.2012
(73) Titulaire: Sika Technology AG, 6340 Baar (CH)
(72) Inventeur: GUYOT, Christophe, F-69005 Lyon (FR); GUILLOT, Laurent, F-27200 Vernon (FR)
(74) Mandataire: Isler, Jörg
(86) Numéro de dépôt international: PCT/EP2010/052089
(87) Numéro de publication internationale: WO 2010/097337

(56) Documents cités:
- EP-A- 1 661 874
- WO-A-00/34200
- WO-A-2006/084588
- FR-A- 2 789 679
- US-B1- 6 464 776

## Description

La présente invention se rapporte à une composition sèche comprenant au moins un liant et une huile comprenant au moins un composé de formule (I), permettant notamment de réduire l'émission de poussière, ainsi qu'à son procédé de préparation.

La composition de la présente invention est utilisable par exemple pour la préparation de matériaux à base de ciment, tels que les mortiers, les bétons, les enduits, etc.

Dans la description ci-dessous, les références entre crochets **([ref. x])** renvoient à la liste des références présentée après les exemples.

### Etat de la technique

Les compositions sèches ou prêtes à l'emploi à base de ciment, pour mortiers ou enduits sont généralement sous forme de produits pulvérulents et sont connues pour présenter un taux d'émission de poussière important, par exemple lors de leur fabrication, leur conditionnement ou leur utilisation.

Cette émission de poussière pose des problèmes pour la santé des travailleurs et leurs conditions de travail.

De plus, les poussières souillent l'environnement local dans lequel les matériaux sont stockés ou manipulés (usine ou site de construction).

En outre, les particules les plus fines et qui s'envolent plus facilement, peuvent être des adjuvants ou des additifs faiblement dosés. Or, ces constituants sont coûteux et jouent un rôle important dans la composition ou pour les propriétés du matériau final. L'envol de ces constituants peut modifier la constitution de la composition et entraîner une perte des performances du matériau final.

Par ailleurs, les particules fines des compositions peuvent être de nature hygroscopique et/ou électrostatique et peuvent provoquer des difficultés supplémentaires de mise en oeuvre ou d'emploi des compositions sèches, par exemple des problèmes de coulabilité, de collage, de risque d'explosions du type « coup de poussière ».

Pour réduire les émissions de poussière, des additifs « anti-poussière » ont été employés dans la formulation des compositions.

On peut citer par exemple, le brevet US 6464776 qui décrit l'utilisation de polytétrafluoroéthylène pour limiter l'émission de poussière des compositions de ciment ou mortier. Mais ces constituants favorisent la pénétration d'air dans la composition ce qui altère les caractéristiques physico-chimiques du matériau, d'où la nécessité d'ajouter des additifs agents démoussants supplémentaires.

La demande de brevet WO 2006/084588, décrit quant à elle l'utilisation de composés hydrocarbonés comme additifs pour réduire la poussière engendrée par les compositions sèches pour la construction.

Cependant, parmi les additifs connus, certains sont peu efficaces et l'obtention d'un effet « anti-poussière » significatif nécessite des quantités importantes de ces additifs.

Par ailleurs, certains additifs sont coûteux ou nécessitent d'être préparés par des procédés contraignants ou difficiles à mettre en oeuvre.

De plus, certains additifs peuvent détériorer les propriétés et performances des mortiers ou bétons, et notamment, les caractéristiques d'ouvrabilité, de résistance, les propriétés d'adhérence, les propriétés d'imperméabilisation, de durabilité.

Il existe donc un réel besoin palliant ces défauts et inconvénients de l'art antérieur. En particulier, il existe un réel besoin de disposer de compositions sèches pour matériaux à base de ciments permettant de limiter efficacement les émissions et l'envol de poussière lors de leur fabrication, transport ou manipulation. Il existe un réel besoin de disposer de compositions de faibles coûts, pratiques et faciles d'utilisation, présentant par exemple de bonnes propriétés de stabilité, coulabilité, etc. En outre, il existe un réel besoin de disposer de compositions sèches permettant d'obtenir des matériaux finaux présentant de bonnes caractéristiques physico-chimiques, et notamment d'ouvrabilité, de durabilité, de résistance à la compression.

### Exposé de l'invention

La présente invention a précisément pour but de répondre à ces besoins et inconvénients de l'art antérieur en fournissant une composition sèche comprenant au moins un liant et une huile comprenant au moins un composé de formule (I) suivante : 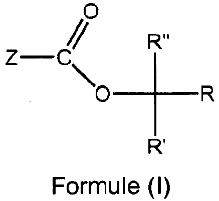 dans laquelle,
- Z représente un radical alkyle en C₄ à C₂₈, linéaire ou ramifié, éventuellement substitué ou un radical alcényle en C₄ à C₂₈, linéaire ou ramifiée, éventuellement substitué, et
- R, R' et R", identiques ou différents, représentent indépendamment un atome d'hydrogène, un radical hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué.

On entend par « liant » au sens de la présente invention, un matériau assurant la cohésion d'un ensemble, permettant de lier entre eux différents éléments tels que des sables, des agrégats, des granulats. Il peut par exemple s'agir de liants minéraux (par exemple des liants hydrauliques) ou de liants organiques (par exemple des liants hydrocarbonés).

On entend par « liant minéral » au sens de la présente invention, un liant composé de minéraux qui, mélangés à l'eau forment une pâte qui durcit en agglomérant les granulats. Parmi les liants minéraux, on peut citer tout liant connu de l'homme du métier, par exemple le ciment (par exemple ciment alumineux, hydraulique, magnésien, métallurgique, sursulfaté, composé, ciment de haut-fourneau, ciment de laitier, ciment aux cendres, ciment pouzzolanique, ciment Portland, ciment Portland composé), la chaux (chaux calcinée, frittée, carbonatée, fluatée, chaux grasse, chaux maigre, chaux hydraulique, chaux éteinte), le plâtre, l'argile, le métakaolin.

On entend par « liant organique » au sens de la présente invention, un liant hydrocarboné, c'est-à-dire un liant à base d'hydrocarbures. Parmi les liants organiques, on peut citer tout liant connu de l'homme du métier, par exemple les polymères synthétiques.

Les polymères synthétiques peuvent par exemple se présenter sous forme de poudre sèche, non collante et/ou redispersable (appellation consacrée, "redispersible powder" en anglais). Il peut s'agir par exemple de polymères thermoplastiques, de polymères thermodurcissables, de polymères acryliques, de polymères styrène acryliques, de polymères époxydiques, de polymères polyuréthanes, de polymères à base de monomères d'éthylène, de vinylène et/ou d'acétate de vinyle, de polymères à base de monomères de styrène et/ou de butadiène.

Selon un mode de réalisation particulier de l'invention, le liant peut être choisi dans le groupe comprenant le ciment, la chaux, le plâtre, l'argile, les polymères synthétiques, par exemple tels que définis précédemment, ou un mélange de ceux-ci.

Selon un autre mode de réalisation particulier de l'invention, le liant peut être choisi dans le groupe comprenant le ciment, la chaux, les polymères synthétiques, par exemple tels que définis précédemment, ou un mélange de ceux-ci.

On entend par « radical alkyle » au sens de la présente invention, un radical carboné, qui peut être linéaire, ramifié ou cyclique, éventuellement substitué, comprenant 1 à 28 atomes de carbone.

Dans le cas de Z, le radical alkyle peut être en C₄ à C₂₈, par exemple en C₆ à C₂₄, par exemple en C₁₀ à C₂₂, par exemple en C₁₆ à C₂₀.

Dans le cas de R, R' et/ou R", le radical alkyle peut être en C₁ à C₁₂, par exemple en C₁ à C₁₀, par exemple en C₁ à C₈.

On entend par « radical alcényle » au sens de la présente invention, un radical carboné présentant au moins une double liaison carbone-carbone, qui peut être linéaire, ramifié ou cyclique, éventuellement substitué, comprenant 2 à 28 atomes de carbone.

Dans le cas de Z, le radical alcényle peut être en C₄ à C₂₈, par exemple en C₆ à C₂₄, par exemple en C₁₀ à C₂₂, par exemple en C₁₆ à C₂₀.

Dans le cas de R, R' et/ou R", le radical alcényle peut être en C₂ à C₁₂, par exemple en C₂ à C₁₀, par exemple en C₂ à C₈.

On entend par « radical hétéroalkyle » au sens de la présente invention, un radical alkyle tel que défini précédemment, ledit système alkyle comprenant au moins un hétéroatome, notamment choisi dans le groupe comprenant le soufre, l'oxygène, l'azote, le bore.

On entend par « radical aryle » au sens de la présente invention, un radical hydrocarboné comprenant au moins un cycle satisfaisant la règle d'aromaticité de Hückel. Ledit aryle est éventuellement substitué et peut comprendre de 6 à 18 atomes de carbone, par exemple 6 à 10 atomes de carbone.

On entend par « cycloalkyle » au sens de la présente invention, un radical carboné cyclique, saturé ou insaturé, éventuellement substitué, qui peut comprendre 5 à 10 atomes de carbone.

Le terme « substitué » désigne par exemple le remplacement d'un atome d'hydrogène dans une structure donnée par un radical choisi dans le groupe comprenant un alkyle, un alcényle, un hétéroalkyle, un aryle, hétéroaryle, un hydroxyle, une amine, un halogène, un haloalkyle, etc. Lorsque plus d'une position peut être substituée, les substituants peuvent être les mêmes ou différents à chaque position.

On entend par « haloalkyle » au sens de la présente invention, un radical alkyle tel que défini précédemment, ledit système alkyle comprenant au moins un halogène.

Selon un mode particulier de réalisation de l'invention, dans la formule (I), Z peut représenter un radical alcényle en C₄ à C₂₈ et R, R' et R", identiques ou différents, peuvent représenter indépendamment un atome d'hydrogène ou un radical alkyle en C₁ à C₁₂, linéaire ou ramifié.

Par exemple, dans la formule (I), les groupements R et R' peuvent représenter un atome d'hydrogène, et le groupement R" peut représenter le radical -C₃H₇ ou le radical -CH(C₂H₅)-(CH₂)₃-CH₃.

Selon un mode de réalisation particulier de l'invention, l'huile peut être une huile végétale modifiée.

On entend par « huile végétale modifiée » au sens de la présente invention, une huile d'origine végétale, naturelle, qui a subi un traitement, par exemple une extraction ou une modification chimique. Il peut s'agir par exemple d'un triglycéride d'origine naturelle (par exemple huile de colza, de noix, de lin, de tournesol, de raisin, d'arachide, de maïs, de palme, de carthame, de sésame, de graine de soja, de coco, de coton, de moutarde, etc.) qui a été modifié chimiquement, par exemple par une réaction de transestérification avec un alcool.

Outre son effet anti-poussière amélioré, l'huile végétale modifiée dans la composition de l'invention, présente l'avantage d'être issue de l'agriculture et d'être une ressource renouvelable et respectueuse de l'environnement, par opposition aux huiles dérivées du pétrole, par exemple.

Selon l'invention, l'huile peut comprendre le composé de formule (I) seul ou en mélange avec d'autres composés. Par exemple, le composé de formule (I) peut être en mélange avec d'autres composés de formule (I) différents par exemple avec 1, 2, 3, 4, ou 5 autres composés de formule (I), et/ou avec d'autres composés comme par exemple des esters (par exemple des esters de glycérol, d'acide gras), des alcools (par exemple des alcools de formule générale R R' R" C-OH dans laquelle R, R' et R" sont tels que définis précédemment), des di-glycérides, des tri-glycérides, ou tout produit issu de réactions secondaires ou d'une réaction incomplète lors de la modification de l'huile végétale par exemple par transestérification.

L'huile peut par exemple comprendre au moins 1% de composé(s) de formule (I) en masse totale d'huile. Elle peut encore comprendre par exemple au moins 5% de composé(s) de formule (I), par exemple au moins 15%, par exemple au moins 30%, par exemple au moins 50% en masse totale d'huile.

A titre indicatif, on peut citer des huiles végétales modifiées commerciales comme par exemple les huiles de la gamme Estorob (marque déposée), par exemple les références Estorob 1214, Estorob 1292, Estorob 301.01, Estorob 804.01, Estorob 808.01, Estorob 926.65, ou de la gamme Lubrirob (marque déposée), par exemple les références Lubrirob 1214, Lubrirob 804.01, Lubrirob 808.01, Lubrirob 810.01, Lubrirob 926.55, Lubrirob 926.65, commercialisées par la société Novance (France).

La composition selon l'invention peut être sous forme de poudre. Les particules de poudre peuvent par exemple avoir un diamètre allant jusqu'à 10 mm, par exemple de 10 nm à 10 mm, par exemple de 0,0001 à 5 mm, par exemple de 0,001 à 2 mm. Par exemple, la composition selon l'invention peut comprendre des particules de poudre dont plus de 50% des particules ont un diamètre allant de 0,001 à 10 mm.

L'huile peut avoir une tension superficielle inférieure à 60 mN/m, par exemple inférieure à 45 mN/m. Selon un mode de réalisation de l'invention l'huile peut avoir une tension superficielle inférieure à 35 mN/m.

On entend par « tension superficielle » au sens de la présente invention, la tension qui existe à la surface de séparation entre l'huile et les particules de poudre (solides). La tension superficielle permet de caractériser l'aptitude de l'huile à mouiller la surface des particules de poudre. Selon l'équation d'Young-Dupré, l'huile mouille d'autant plus facilement les particules solides que la tension superficielle de l'huile est plus faible que celle des particules solides.

La tension superficielle de l'huile peut être par exemple déterminée par la méthode de la goutte pendante **([ref. 3]** STAUFFER (C.E) - The measurement of the surface tension by the pendant drop technique. J.Phys. Chem. 69, 1965, p.1933-8).

Selon l'invention, l'huile peut avoir une viscosité dynamique inférieure à 1 Pa.s à 20°C, par exemple inférieure à 0,1 Pa.s à 20°C, par exemple de 0,001 à 0,1 Pa.s à 20°C, par exemple de 0,001 à 0,08 Pa.s à 20°C, par exemple de 0,001 à 0,05 Pa.s à 20°C.

On entend par « viscosité dynamique » selon l'invention la propriété physique de l'huile qui caractérise la contrainte engendrée par un effort de cisaillement dans l'huile.

La viscosité dynamique de l'huile peut être par exemple déterminée par la méthode de la norme NF EN ISO 2555 ou ISO 3104.

Selon un mode de réalisation de l'invention, l'huile peut présenter une tension superficielle inférieure à 45 mN/m et une viscosité dynamique inférieure à 0,1 Pa.s à 20°C.

La poussière dont on cherche à limiter voire réduire l'émission, est constituée par de fines particules (légères) contenues dans la composition sèche. Il a été observé de façon tout à fait surprenante qu'un choix adapté de la tension superficielle et de la viscosité de l'huile permettait d'améliorer l'effet anti-poussière de la composition de l'invention. En effet, un choix adapté de ces paramètres permet de réduire l'émission et l'envol des fines particules sous forme de poussière tout en évitant la formation d'agglomérats non souhaités par exemple agglomération avec de grosses particules pouvant détériorer la mise en oeuvre de la composition sèche de l'invention et ses performances (par exemple ses propriétés de coulabilité, de collage) et/ou les performances des mortiers ou matériaux obtenus à partir de la composition sèche de l'invention (ouvrabilité, résistance mécanique, adhérence). On entend par « fines particules » selon l'invention des particules ayant un diamètre inférieur à 50 µm, par exemple inférieur à 32 µm. On entend par « grosses particules » selon l'invention les particules ayant un diamètre supérieur à 50 µm.

Selon un mode particulier de réalisation de l'invention, la teneur en huile dans la composition peut être de 0,05 à 5% en poids de la composition, par exemple de 0,1 à 5%, par exemple de 0,1 à 1%, par exemple de 0,2 à 1%.

La composition de l'invention peut avoir une teneur en liant(s) de 5 à 95% en poids de la composition, par exemple de 10 à 80%, par exemple de 15 à 50%.

Selon l'invention, la composition peut comprendre en outre au moins un granulat, notamment choisi dans le groupe comprenant le sable, la poudre de pierre, la brique pilée, le gravier, les gravillons, l'alumine, la bauxite, la bauxite calcinée, le silex concassé, ou tout granulat naturel ou synthétique (par exemple bois, caoutchouc, polystyrène). L'homme du métier sera à même de choisir le granulat à utiliser selon l'application ciblée.

Par exemple, la composition peut avoir une teneur en granulat(s) de 5 à 95% en poids de la composition, par exemple de 20 à 90%, par exemple de 50 à 85%.

On entend par « granulat » au sens de la présente invention une particule solide ou un agrégat de particules solides d'origine naturelle ou synthétique, destiné à entrer dans la composition de matériaux destinés à la construction, le bâtiment, la fabrication d'ouvrages de travaux publics. Le granulat peut avoir un diamètre allant de 1 µm à 10 mm, par exemple de 100 µm à 10 mm. Parmi les granulats utilisables, on peut citer par exemple les cailloux, le gravier (présentant une taille des particules de 2 à 10 mm), le sable grossier (présentant une taille de particules de 0,5 à 2 mm), le sable fin (présentant une taille de particules de 100 à 500 µm), le limon, les fines (également appelées fines d'addition ou filler).

On entend par « fine » (ou « filler ») au sens de la présente invention un granulat fin, présentant par exemple une taille de particule inférieure à 125 µm.

Selon un mode de réalisation particulier de l'invention, le granulat peut être un granulat siliceux, calcaire, silico-calcaire, alumineux ou silico-alumineux.

Selon l'invention, la composition peut comprendre en outre un additif choisi dans le groupe comprenant des cendres volantes, un agent hydrofuge ou imperméabilisant, un sel d'acide carboxylique, une résine, un adjuvant retardateur, un adjuvant accélérateur, un agent entraîneur d'air, un agent démoussant, un agent modificateur de rhéologie, et tout autre adjuvant ou additif utilisable connu de l'homme du métier. L'homme du métier sera à même de choisir l'additif selon l'application ciblée. Ces additifs peuvent être avantageusement sous forme de poudre ou sous une forme compatible avec leur introduction dans une composition sèche selon l'invention.

On entend par « additif » au sens de la présente invention un constituant ou produit ajouté à une composition et permettant de procurer à ladite composition des caractéristiques et propriétés particulières, par exemple permettant de modifier les temps de prise du matériau, la conservation, de modifier la viscosité, l'ouvrabilité, d'améliorer les résistances mécaniques, l'imperméabilité, d'empêcher la croissance de microorganismes.

Parmi les agents entraîneur d'air et les agents démoussants, on peut citer par exemple un détergent, un agent mouillant, un agent dispersant, un émulsifiant. Plus précisément, il peut s'agir de tensioactifs anioniques, de tensioactifs cationiques, de tensioactifs zwitterioniques ou amphotères, de tensioactifs non ioniques (par exemple un ester de saccharose, du sorbitol, un ester de polyéthylène glycol, un ester d'acide gras, un éthoxylate ou tout autre tensioactif non ionique décrit par exemple dans la demande de brevet EP 1 661 874).

Parmi les agents hydrofuges ou imperméabilisants, on peut citer par exemple un ester d'acide gras, un dérivé silicone, un dérivé du PTFE (polytétrafluoréthylène).

Parmi les sels d'acide carboxylique, on peut citer par exemple un carboxylate de calcium, par exemple le formiate de calcium.

Parmi les résines, on peut citer par exemple une résine aminée dérivée de l'urée (par exemple la mélamine).

Parmi les adjuvants retardateurs (composé ayant un effet retardant sur la prise des ciments, mortiers ou autres matériaux), on peut citer par exemple les gluconates, l'acide citrique, l'acide tartrique, leurs sels, les résines aminoplastes ou autres adjuvants retardateurs décrits par exemple dans la demande de brevet EP 1 661 874.

Parmi les agents accélérateurs, on peut citer par exemple les sels de formiate, thiocyanate, nitrate, NaCl, CaCl₂, l'hydroxyde d'aluminium, l'alumine, la tri-éthanol amine, la tri-isopropanol amine, etc.

Parmi les modificateurs de rhéologie, on peut citer par exemple les éthers de cellulose, les gommes (par exemple xanthane, guar, gélane, etc.), les amidons, les éthers d'amidon, l'alcool polyvinylique, les poly-acrylates hydro-solubles, la silice colloïdale, les polymères ou copolymères (un copolymère acétate-versatate, un copolymère styrène-acrylique, un polymère acétate de polyvinyle, un co-polymère acrylique, un terpolymère éthylène-vinylène-acétate), mais aussi les fluidifiants comme la mélamine et ses dérivés, le poly-naphtalène et ses dérivés, les poly-carboxylates, la caséine.

La teneur totale en additif(s) dans la composition peut être de 0,01 à 20% en poids total de la composition, par exemple de 0,05 à 15%, par exemple de 0,1 à 10%.

Selon un mode particulier de réalisation de l'invention, la composition peut comprendre :
- au moins une huile comprenant au moins 1% de composé de formule (I), avec une teneur totale en huile de 0,05 à 5% en poids de la composition,
- au moins un liant avec une teneur totale en liant de 5 à 95% en poids de la composition,
- au moins un granulat avec une teneur totale en granulat de 5 à 95% en poids de la composition, et
- au moins un additif avec une teneur totale en additif de 0,01 à 20% en poids de la composition.

La présente invention concerne également un procédé de préparation d'une composition selon l'invention dans lequel :
(i) on prépare un mélange comprenant au moins un liant et/ou au moins un granulat et/ou au moins un additif,
(ii) on ajoute au mélange obtenu en (i) au moins une huile comprenant au moins un composé de formule (I).

La présente invention concerne également un procédé de préparation d'une composition selon l'invention dans lequel on prépare un mélange comprenant au moins une huile comprenant au moins un composé de formule (I), au moins un liant, et éventuellement au moins un granulat et/ou au moins un additif.

La présente invention concerne également un procédé de préparation d'une composition selon l'invention dans lequel :
(i) on prépare un mélange comprenant au moins une huile comprenant au moins un composé de formule (I), et au moins un liant et/ou au moins un granulat et/ou au moins un additif
(ii) on prépare un mélange comprenant au moins un liant et/ou au moins un granulat et/ou au moins un additif
(iii) on ajoute le mélange obtenu en (i) au mélange obtenu en (ii).

La présente invention concerne également l'utilisation d'une composition selon l'invention notamment pour la préparation d'un coulis de ciment, d'un mortier, d'un béton, d'un enduit, d'un crépit et/ou d'une chape.

La présente invention concerne également l'utilisation d'une composition selon l'invention notamment pour la construction, le bâtiment, la réparation des bétons, la protection des bétons et aciers contre les intempéries ou les agressions extérieures, l'imperméabilisation, l'ancrage, le callage, le scellement, le collage de tuiles ou carrelages, et le revêtement de façade.

D'autres avantages pourront encore apparaître à l'homme du métier à la lecture des exemples ci-dessous.

### EXEMPLES

Dans les exemples qui suivent, l'agent « anti-poussière » désigne une huile comprenant au moins un composé de formule (I).

### Exemple 1 : Compositions (1a) et (1b) selon l'invention

Les compositions (1 a) et (1 b) selon l'invention sont des compositions sèches pour mortier dont les teneurs en constituants sont données dans le tableau 1 ci-dessous (en % en poids total de la composition sèche) :

**Tableau 1 : Exemple de composition selon l'invention**

| | |
|---|---|
| Ciment | 40% |
| (CEM I 52.5 N CE PMES CP2 NF commercialisé par la société Lafarge, France) | |
| Sable siliceux | 45% |
| (Sable SB commercialisé par la société Fulchiron, France) | |
| Filler silico-calcaire | 12,1% |
| (Poudre de Pierre, commercialisé par la société Piketty, France) | |
| Copolymère acétate-versatate | 1,5% |
| (Elotex MP2080, commercialisé par la société Elotex) | |
| Formiate de calcium | 0,7% |
| (commercialisé par la société Lanxess) | |
| Agent « anti-poussière » | 0,7% |

Les deux compositions (1a) et (1b) ont été réalisées avec les proportions données ci-dessus, avec pour agent « anti-poussière » les huiles végétales modifiées suivantes :
- composition (1 a) comprenant 0,7% d'huile végétale modifiée commercialisée sous la référence Lubrirob 804.01 par la société Novance (France).
- composition (1b) comprenant 0,7% d'huile végétale modifiée commercialisée sous la référence Lubrirob 808.01 par la société Novance (France).

Les caractéristiques des huiles végétales modifiées, utilisées comme agent « anti-poussière » dans les compositions (1 a) et (1b) selon l'invention, sont données dans le tableau 2 ci-dessous :

**Tableau 2 : Caractéristiques des huiles végétales modifiées dans des compositions selon l'invention**

| | Lubrirob 804.01 | Lubrirob 808.01 |
|---|---|---|
| viscosité à 20°C (en Pa.s) | 0,004 | 0,015 |
| tension superficielle (en mN/m) | 30 | 29 |

Les deux huiles végétales modifiées Lubrirob 804.01 et Lubrirob 808.01 sont issues de la transestérification d'une huile de colza par un alcool (le butanol pour l'huile Lubrirob 804.01 et le 2-éthyle-hexane-1-ol (HO-CH₂-CH(C₂H₅)-(CH₂)₃-CH₃) pour l'huile Lubrirob 808.01).

Elles comprennent notamment des composés de formule (I) dans laquelle :
- le groupement Z est un radical alcényle en C₁₈,
- les groupements R et R' sont des atomes d'hydrogène et le groupement R" est le radical alkyle -C₃H₇ (pour l'huile « L804.01 ») ou le radical alkyle -CH(C₂H₅)-(CH₂)₃-CH₃ (pour l'huile « L808.01 »).

### Mode opératoire :

Les compositions (1a) et (1 b) ont été préparées comme suit :
(i) on mélange le sable, le filler, le ciment, et les adjuvants
(ii) on ajoute l'agent anti-poussière au mélange précédent et on mélange le tout.

### Exemple 2 : Compositions (2a) et (2b) selon l'invention

Les compositions (2a) et (2b) selon l'invention sont des compositions sèches pour mortier dont les teneurs en constituants sont données dans le tableau 3 ci-dessous (en % en poids total de la composition sèche) :

**Tableau 3 : Exemple de composition selon l'invention**

| | |
|---|---|
| Ciment | 30% |
| (CEM II/A LL 42,5 R CE PM-CP2 NF commercialisé par la société Calcia, France) | |
| Sable siliceux | 61% |
| (Sable SB commercialisé par la société Fulchiron, France) | |
| Fine (ou « filler ») siliceux | 2,74% |
| (Silice S5 commercialisé par la société Fulchiron, France) | |
| Cendres volantes | 2,5% |
| (Condensil S75, commercialisé par la société Sika) | |
| Copolymère acétate-versatate | 2% |
| (Vinnapas 5011,L commercialisé par la société Wacker) | |
| Ester d'acide gras | 0,2% |
| (Axilat DF6352DD, commercialisé par la société Hexion) | |
| Fibres de polypropylène | 0,1% |
| (Crackstop 6 mm, commercialisé par la société Bonar) | |
| Mélamine | 0,06% |
| (Sikament FF86, commercialisé par la société Sika) | |
| Formiate de calcium | 0,7% |
| (commercialisé par la société Lanxess) | |
| Agent « anti-poussière » | 0,7% |

Les deux compositions (2a) et (2b) ont été réalisées avec les proportions données ci-dessus, avec pour agent « anti-poussière » les huiles végétales modifiées suivantes :
- composition (2a) comprenant 0,7% d'huile végétale modifiée commercialisée sous la référence Lubrirob 804.01 par la société Novance (France).
- composition (2b) comprenant 0,7% d'huile végétale modifiée commercialisée sous la référence Lubrirob 808.01 par la société Novance (France).

### Mode opératoire :

Les compositions (2a) et (2b) ont été préparées comme suit :
(i) on mélange le sable, le filler, le ciment, et les adjuvants
(ii) on ajoute l'agent anti-poussière au mélange précédent et on mélange le tout.

### Exemple 3 : Mesure de l'effet « anti-poussière » des compositions de l'invention et exemples comparatifs

### a) Compositions (1a), (1 b), (1c), (1d), (1e) et (1f)

Quatre compositions (1a), (1b), (1c), (1d) et (1e) ont été réalisées avec divers agent « anti-poussière » ainsi qu'une composition (1f), ou composition « témoin », ne comprenant pas d'agent « anti-poussière » :
- composition (1a) selon l'invention comprenant 0,7% d'huile végétale modifiée Lubrirob 804.01 (ou « L 804.01 »)
- composition (1b) selon l'invention comprenant 0,7% d'huile végétale modifiée Lubrirob 808.01 (ou « L 808.01 »)
- composition (1c) (préparée selon le mode opératoire de l'exemple 1) comprenant 0,7% d'huile végétale non modifiée (huile de colza alimentaire VITA D'OR (marque déposée), commercialisée par la société CARGILL OIL, Belgique)
- composition (1d) (préparée selon le mode opératoire de l'exemple 1) comprenant 0,7% d'huile végétale non modifiée (huile de tournesol alimentaire, commercialisée par la société BOUTON d'OR, Belgique).
- composition (1 e) (préparée selon le mode opératoire de l'exemple 1) comprenant 0,7% d'acide linoléique (EDENOR SB 05 (marque déposée), commercialisé par la société Emery Oleachemicals, Allemagne).
- composition (1f) (préparée selon le mode opératoire de l'exemple 1) ne comprenant pas d'agent « anti-poussière ».

Par opposition aux huiles végétales modifiées Lubrirob 804.01 et Lubrirob 808.01 qui comprennent majoritairement des composés de formule (I) comme décrit dans l'exemple 1, les deux huiles végétales naturelles non modifiées (de colza et de tournesol) comprennent majoritairement des triglycérides composés de radicaux alcényle en C₁₈.

Le test réalisé pour mesurer l'émission de poussière d'un mortier consiste à remplir un flacon d'une contenance de 100 ml avec 65 g de mortier sec et de secouer manuellement 10 fois le flacon fermé. Une fois l'agitation stoppée, le flacon est rapidement ouvert. L'émission de poussière est alors évaluée au travers de la poussière qui se dégage de l'ouverture du flacon. L'émission de poussière est classée sur une échelle variant de 1 à 4 (1 correspondant à une très faible d'émission de poussière, 4 correspondant à une très forte émission de poussière).

Les résultats obtenus sont répertoriés dans le tableau 4 suivant :

**Tableau 4 : Comparaison de l'émission de poussière**

| Composition | (1a) (L804.01) | (1b) (L808.01) | (1c) (huile de colza) | (1d) (huile de tournesol) | (1e) (acide linoléique) | (1f) (témoin) |
|---|---|---|---|---|---|---|
| Emission de poussière | 1 | 1 | 3 | 3 | 4 | 4 |

Les compositions (1 a) et (1b) selon l'invention permettent une réduction importante de l'émission de poussière comparé à la composition témoin (1f) ne comportant pas d'agent « anti-poussière ».

Par ailleurs, les compositions (1 a) et (1 b) selon l'invention comprenant une huile végétale modifiée sont bien plus performantes en termes de réduction de l'émission de poussière que les compositions homologues (1c), (1d) et (1e) comprenant une huile végétale non modifiée, ou l'acide linoléique.

### b) Compositions (2a), (2b), (2c), (2d), (2e) et (2f)

Quatre compositions (2a), (2b), (2c) (2d) et (2e) ont été réalisées avec divers agent « anti-poussière » ainsi qu'une composition (2f), ou composition « témoin », ne comprenant pas d'agent « anti-poussière » :
- composition (2a) selon l'invention comprenant 0,7% d'huile végétale modifiée Lubrirob 804.01 (ou « L 804.01 »)
- composition (2b) selon l'invention comprenant 0,7% d'huile végétale modifiée Lubrirob 808.01 (ou « L 808.01 »)
- composition (2c) (préparée selon le mode opératoire de l'exemple 2) comprenant 0,7% d'huile végétale non modifiée (huile de colza alimentaire VITA D'OR (marque déposée), commercialisée par la société CARGILL OIL, Belgique)
- composition (2d) (préparée selon le mode opératoire de l'exemple 2) comprenant 0,7% d'huile végétale non modifiée (huile de tournesol alimentaire, commercialisée par la société BOUTON d'OR, Belgique).
- composition (2e) (préparée selon le mode opératoire de l'exemple 2) comprenant 0,7% d'acide linoléique (EDENOR SB 05 (marque déposée), commercialisé par la société Emery Oleachemicals, Allemagne).
- composition (2f) (préparée selon le mode opératoire de l'exemple 2) ne comprenant pas d'agent « anti-poussière ».

Le test réalisé pour mesurer l'émission de poussière pour ces 5 compositions est réalisé comme précédemment.

Les résultats obtenus sont répertoriés dans le tableau 5 suivant :

**Tableau 5 : Comparaison de l'émission de poussière (2)**

| Composition | (2a) (L804.01) | (2b) (L808.01) | (2c) (huile de colza) | (2d) (huile de tournesol) | (2e) (acide linoléique) | (2f) (témoin) |
|---|---|---|---|---|---|---|
| Emission de poussière | 1 | 1 | 3 | 3 | 4 | 4 |

Les compositions (2a) et (2b) selon l'invention permettent une réduction importante de l'émission de poussière comparé à la composition témoin (2f) ne comportant pas d'agent « anti-poussière ».

Par ailleurs, les résultats montrent une réduction de l'émission de poussière beaucoup plus importante dans le cas des compositions (2a) et (2b) selon l'invention comprenant une huile végétale modifiée que dans le cas des compositions homologues (2c), (2d) et (2e) comprenant une huile végétale non modifiée, ou l'acide linoléique.

### Exemple 4: Evaluation des performances des mortiers issus des compositions de l'invention

Pour ces essais, les cinq compositions préparées selon l'exemple 3.a) ont été évaluées et comparées.

Ces essais de performance ont été réalisés sur les mortiers durcis préparés à partir des compositions sèches de mortier (1a), (1b), (1c) et (1d) auxquelles de l'eau a été ajoutée à hauteur de 12,5% en poids total de poudre sèche. Les échantillons de mortiers ont été évalués après 28 jours de durcissement.

Les tests suivants ont été réalisés :
- Test de résistance en compression (mesure effectuée selon la norme d'essai EN 12190).
- Test de résistance en flexion (mesure effectuée selon la norme d'essai EN 12190).
- Test d'adhérence (mesure effectuée selon la norme d'essai EN 1542).
- Test de retrait (mesure effectuée selon la norme d'essai EN 12617-4).

Les résultats de ces tests sont répertoriés dans le tableau 6 suivant :

**Tableau 6 : Comparaison des performances de mortiers**

| Composition | (1a) (L804.01) | (1b) (L808.01) | (1c) (huile de colza) | (1d) (huile de tournesol) | (1f) (témoin) |
|---|---|---|---|---|---|
| Résistance en compression à 28 jours (MPa) | 46 | 42 | 36 | 37 | 49 |
| Résistance en flexion à 28 jours (MPa) | 8,5 | 8,2 | 6 | 6,3 | 8 |
| Adhérence à 28 jours (MPa) | 0,9 | 1,0 | 1,0 | 0,95 | 1,0 |
| Retrait libre à 28 jours (µm/m) | - 1145 | -1150 | -1150 | - 1200 | -1450 |

Ces résultats montrent que les mortiers obtenus avec les compositions de l'invention (compositions (1 a) et (1b)) ont des performances très bonnes. En particulier les propriétés de résistance en compression et en flexion sont nettement améliorées par rapport aux compositions (1c) et (1d). Par ailleurs, les propriétés d'adhérence et de retrait libre sont comparables à celles des compositions (1c) et (1d).

Par ailleurs, les performances des mortiers issus des compositions (1a) et (1b) de l'invention ne sont pas dégradées par rapport mortier issu de la composition témoin (1f). Les propriétés de retrait libre sont même améliorées par rapport à la composition témoin (1f). Ainsi, tout en permettant une réduction de l'émission de poussière, les compositions selon l'invention comprenant l'huile végétale modifiée permettent de conserver de très bonnes performances, comparables à la composition témoin (ne comprenant pas d'additif « anti-poussière »).

### Exemple 5 : Mesure de l'effet « anti-poussière ».

Les compositions suivantes ont été préparées :
- composition (1a) selon l'invention comprenant 0,7% d'huile végétale modifiée Lubrirob 804.01 (préparée selon le mode opératoire de l'exemple 1).
- composition témoin (1f) ne comprenant pas d'agent « anti-poussière », (préparée selon le mode opératoire de l'exemple 1),
- composition (1g) préparée par tamisage de la composition témoin (1f) éliminant les particules de diamètre inférieur à 32 µm.

L'émission de poussière de chacune de ces trois compositions a été mesurée selon le test décrit dans l'exemple 3. Les résultats obtenus sont répertoriés dans le tableau 7 suivant :

**Tableau 7 : Caractéristiques de l'effet « anti-poussière »**

| Composition | (1a) (L804.01) | (1f) (témoin) | (1g) (témoin tamisé à 32 µm) |
|---|---|---|---|
| Emission de poussière | 1 | 4 | 1 |

Comme déjà observé dans l'exemple 3, la composition (1 a) selon l'invention permet une réduction importante de l'émission de poussière comparée à la composition témoin (1f) ne comportant pas d'agent « anti-poussière ».

Par ailleurs, ces résultats montrent que la composition (1a) selon l'invention présente une réduction de l'émission de poussière comparable à celle de la composition (1g) de laquelle les particules de diamètre inférieur à 32 µm ont été éliminées par tamisage.

### Listes des références

**[ref. 1]** US 6464776.
**[ref. 2]** WO 2006/084588.
**[ref. 3]** STAUFFER (C.E) - The measurement of the surface tension by the pendant drop technique. J.Phys. Chem. 69,1965, p.1933-8.
**[ref. 4]** EP 1661874.

## Revendications

1. Composition sèche comprenant au moins un liant et une huile comprenant au moins un composé de formule (I) suivante : 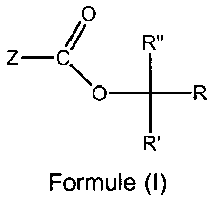 dans laquelle,
• Z représente un radical alkyle en C₄ à C₂₈, linéaire ou ramifié, éventuellement substitué ou un radical alcényle en C₄ à C₂₈, linéaire ou ramifié, éventuellement substitué, et
• R, R' et R", identiques ou différents, représentent indépendamment un atome d'hydrogène, un radical hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué.

2. Composition selon la revendication 1 dans laquelle, dans la formule (I), Z représente un radical alcényle en C₄ à C₂₈ et R, R' et R", identiques ou différents, représentent indépendamment un atome d'hydrogène ou un radical alkyle en C₁ à C₁₂, linéaire ou ramifié.

3. Composition selon la revendication 1 ou 2 dans laquelle, l'huile est une huile végétale modifiée.

4. Composition selon l'une quelconque des revendications 1 à 3, ladite composition étant sous forme de poudre.

5. Composition selon l'une quelconque des revendications 1 à 4 dans laquelle l'huile a une tension superficielle inférieure à 60 mN/m.

6. Composition selon l'une quelconque des revendications 1 à 5 dans laquelle le composé de formule (I) est compris dans une huile ayant une viscosité dynamique inférieure à 0,1 Pa.s à 20°C.

7. Composition selon l'une quelconque des revendications 1 à 6 dans laquelle la teneur en huile est de 0,05 à 5% en poids de la composition.

8. Composition selon l'une quelconque des revendications 1 à 7 dans laquelle le liant est choisi dans le groupe comprenant le ciment, la chaux, le plâtre, l'argile, les polymères synthétiques ou un mélange de ceux-ci.

9. Composition selon l'une quelconque des revendications 1 à 7 dans laquelle le liant est choisi dans le groupe comprenant le ciment, la chaux, les polymères synthétiques ou un mélange de ceux-ci.

10. Composition selon l'une quelconque des revendications 1 à 9 dans laquelle la teneur en liant(s) est de 5 à 95% en poids de la composition.

11. Composition selon l'une quelconque des revendications 1 à 10 comprenant en outre au moins un granulat choisi dans le groupe comprenant le sable, la poudre de pierre, la brique pilée, le gravier, les gravillons, l'alumine, la bauxite, la bauxite calcinée, le silex concassé, et tout granulat naturel ou synthétique.

12. Composition selon la revendication 11 dans laquelle la teneur en granulat(s) est de 5 à 95% en poids de la composition.

13. Composition selon la revendication 11 ou 12 dans laquelle le granulat est un granulat siliceux, calcaire, silico-calcaire, alumineux ou silico-alumineux.

14. Composition selon l'une quelconque des revendications 1 à 13 comprenant en outre un additif choisi dans le groupe comprenant des cendres volantes, un agent hydrofuge ou imperméabilisant, un sel d'acide carboxylique, une résine, un adjuvant retardateur, un adjuvant accélérateur, un agent entraineur d'air, un agent démoussant, un agent modificateur de rhéologie.

15. Procédé de préparation d'une composition selon l'une quelconque des revendications 1 à 14 dans lequel :
(i) on prépare un mélange comprenant au moins un liant et/ou au moins un granulat et/ou au moins un additif,
(ii) on ajoute au mélange obtenu en (i) au moins un composé de formule (I),
ou
on prépare un mélange comprenant au moins un composé de formule (I), au moins un liant et éventuellement au moins un granulat et/ou au moins un additif,
ou
(i) on prépare un mélange comprenant au moins un composé de formule (I) et au moins un liant et/ou au moins un granulat et/ou au moins un additif
(ii) on prépare un mélange comprenant au moins un liant et/ou au moins un granulat et/ou au moins un additif
(iii) on ajoute le mélange obtenu en (i) au mélange obtenu en (ii).

16. Utilisation d'une composition selon l'une quelconque des revendications 1 à 14 pour la préparation d'un coulis de ciment, d'un mortier, d'un béton, d'un enduit, d'un crépit et/ou d'une chape.

17. Utilisation selon la revendication 16 pour la construction, le bâtiment, la réparation des bétons, la protection des bétons et aciers contre les intempéries ou les agressions extérieures, l'imperméabilisation, l'ancrage, le callage, le scellement, le collage de tuiles ou carrelages, et le revêtement de façade.

## Patentansprüche

1. Trockenzusammensetzung, umfassend mindestens ein Bindemittel und ein Öl, die mindestens eine Verbindung der folgenden Formel (I) umfasst: 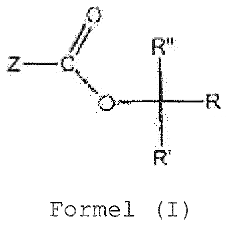 wobei,
- Z für einen gegebenenfalls substituierten, linearen oder verzweigten C₄- bis C₂₈-Alkylrest oder einen gegebenenfalls substituierten, linearen oder verzweigten C₄- bis C₂₈-Alkenyl-Rest steht, und
- R, R' und R" gleich oder verschieden sind und einzeln für ein Wasserstoffatom , einen Hydroxylrest, einen gegebenenfalls substituierten, linearen oder verzweigten C₁-bis C₁₂-Alkylrest, einen gegebenenfalls substituierten, linearen oder verzweigten C₂- bis C₁₂-Alkenylrest, einen gegebenenfalls substituierten linearen oder verzweigten C₁- bis C₁₂-Heteroalkylrest, einen gegebenenfalls substituierten C₅-bis C₁₀-Cycloalkylrest und einen gegebenenfalls substituierten C₆- bis C₁₈-Arylrest stehen.

2. Zusammensetzung nach Anspruch 1, wobei in Formel (I) Z für einen C₄- bis C₂₈-Alkenylrest steht und R, R' und R", gleich oder verschieden, einzeln für ein Wasserstoffatom oder einen linearen oder verzweigten C₁- bis C₁₂-Alkylrest stehen.

3. Zusammensetzung nach Anspruch 1 oder 2, wobei das Öl ein modifiziertes Pflanzenöl ist.

4. Zusammensetzung nach einem der Ansprüche 1 bis 3, wobei die Zusammensetzung in Form eines Pulvers vorliegt.

5. Zusammensetzung nach einem der Ansprüche 1 bis 4, wobei das Öl eine Oberflächenspannung von weniger als 60 mN/m aufweist.

6. Zusammensetzung nach einem der Ansprüche 1 bis 5, wobei die Verbindung der Formel (I) in einem Öl mit einer dynamischen Viskosität von weniger als 0,1 Pa•s bei 20 °C enthalten ist

7. Zusammensetzung nach einem der Ansprüche 1 bis 6, wobei der Ölgehalt von 0,05 bis 5 Gew.- der Zusammensetzung beträgt.

8. Zusammensetzung nach einem der Ansprüche 1 bis 7, wobei das Bindemittel aus der Gruppe umfassend Zement, Kalk, Gips, Ton, synthetische Polymere oder einer Mischung davon ausgewählt ist.

9. Zusammensetzung nach einem der Ansprüche 1 bis 7, wobei das Bindemittel aus der Gruppe umfassend Zement, Kalk, synthetische Polymere oder ein Gemisch davon ausgewählt ist.

10. Zusammensetzung nach einem der Ansprüche 1 bis 9, wobei der Gehalt an Bindemittel(n) von 5 bis 95 Gew.- der Zusammensetzung beträgt.

11. Zusammensetzung nach einem der Ansprüche 1 bis 10, die ferner mindestens einen Zuschlagstoff enthält, der aus der Gruppe umfassend Sand, Steinmehl, Ziegelbruch, Kies, Kies, Aluminiumoxid, Bauxit, kalzinierte Bauxit, zerkleinertem Flint und natürlichen oder künstlichen Zuschlagstoff ausgewählt ist.

12. Zusammensetzung nach Anspruch 11, wobei der Gehalt an Zuschlagstoff(en) von 5 bis 95 Gew.- der Zusammensetzung beträgt.

13. Zusammensetzung nach Anspruch 11 oder 12, wobei der Zuschlagstoff ein kieselsäurehaltiger, kalkhaltiger, kieselsäure-kalkhaltiger, aluminiumhaltiger oder kieselsäurealuminiumhaltiger Zuschlagstoff ist.

14. Zusammensetzung nach einem der Ansprüche 1 bis 13, die ferner ein Additiv enthält, das aus der Gruppe umfassend Flugasche, ein wasserabweisendes oder wasserdichtmachendes Mittel, ein Carbonsäuresalz, ein Harz, einen Verzögerungshilfsstoff, einen Beschleunigungshilfsstoff, einen Luftporenbildner, ein Entschäumungsmittel oder ein Rheologiemodifizierungsmittel ausgewählt ist.

15. Verfahren zur Herstellung einer Zusammensetzung nach einem der Ansprüche 1 bis 14, wobei:
(i) eine Mischung herstellt wird, die mindestens ein Bindemittel und/oder mindestens einen Zuschlagstoff und/oder mindestens ein Additiv umfasst,
(ii) mindestens eine Verbindung der Formel (I) der in (i) erhaltenen Mischung zugesetzt wird,
oder
eine Mischung herstellt wird, die mindestens eine Verbindung der Formel (I), mindestens ein Bindemittel und gegebenenfalls mindestens einen Zuschlagstoff und/oder mindestens ein Additiv, umfasst,
oder
(i) eine Mischung hergestellt wird, die mindestens eine Verbindung der Formel (I) und mindestens ein Bindemittel und/oder mindestens einen Zuschlagstoff und/oder mindestens ein Additiv umfasst,
(ii) eine Mischung hergestellt wird, die mindestens ein Bindemittel und/oder mindestens einen Zuschlagstoff und/oder mindestens ein Additiv umfasst,
(iii) die in (i) erhaltene Mischung der in (ii) erhaltenen Mischung zugesetzt wird.

16. Verwendung einer Zusammensetzung nach einem der Ansprüche 1 bis 14 zur Herstellung einer Zementmasse, eines Mörtels, eines Betons, einer Spachtelmasse, eines Putzes, und/oder eines Estrichs.

17. Verwendung einer Zusammensetzung nach Anspruch 16 für Konstruktion, Bau, Betoninstandsetzung, den Schutz von Beton und Stahl gegen schlechtes Wetter oder Angriffe von au en, Abdichtung, Verankerung, Füllung, Verschluss, Kleben von Fliesen oder Fliesenböden und Fassadenverkleidung.

## Claims

1. Dry composition comprising at least one binder and an oil comprising at least one compound of formula (I) below: 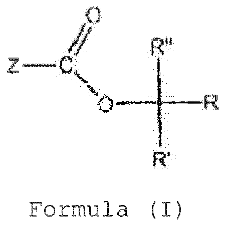 wherein,
- Z represents an optionally substituted, linear or branched C₄ to C₂₈ alkyl radical or an optionally substituted, linear or branched C₄ to C₂₈ alkenyl radical, and
- R, R' and R" are identical or different and separately represent a hydrogen atom, a hydroxyl radical, an optionally substituted, linear or branched C₁ to C₁₂ alkyl radical, an optionally substituted, linear or branched C₂ to C₁₂ alkenyl radical, an optionally substituted, linear or branched C₁ to C₁₂ heteroalkyl radical, an optionally substituted C₅ to C₁₀ cycloalkyl radical, and an optionally substituted C₆ to C₁₈ aryl radical.

2. Composition according to claim 1, wherein, in formula (I), Z represents a C₄ to C₂₈ alkenyl radical and R, R' and R", identical or different, separately represent a hydrogen atom or a linear or branched C₁ to C₁₂ alkyl radical.

3. Composition according to claim 1 or 2, wherein the oil is a modified vegetable oil.

4. Composition according to any of claims 1 to 3, said composition being in the form of a powder.

5. Composition according to any of claims 1 to 4 wherein the oil has a surface tension less than 60 mN/m.

6. Composition according to any of claims 1 to 5 wherein the compound of formula (I) is contained in an oil having a dynamic viscosity lower than 0.1 Pa·sec at 20°C.

7. Composition according any of claims 1 to 6 wherein the oil content is from 0.05 to 5 by weight of the composition.

8. Composition according to any of claims 1 to 7 wherein the binder is selected from the group comprising cement, lime, plaster, clay, synthetic polymers or a mixture thereof.

9. Composition according to any of claims 1 to 7 wherein the binder is selected from the group comprising cement, lime, synthetic polymers or a mixture thereof.

10. Composition according to any of claims 1 to 9 wherein the content of the binder(s) is from 5 to 95 by weight of the composition.

11. Composition according to any of claims 1 to 10, which further includes at least one aggregate selected from the group comprising sand, stone powder, crushed brick, gravel, grits, alumina, bauxite, calcined bauxite, crushed flint, and any natural or synthetic aggregate.

12. Composition according to claim 11 wherein the content of the aggregate (s) is from 5 to 95 by weight of the composition.

13. Composition according to claim 11 or 12 wherein the aggregate is a siliceous, calcareous, silico-calcareous, aluminous, or silico-aluminous aggregate.

14. Composition according to any of claims 1 to 13 which further includes an additive selected from the group comprising fly ash, a water-repellent or waterproofing agent, a carboxylic acid salt, a resin, a retarding adjuvant, an accelerating adjuvant, an air-entraining agent, a defoaming agent, or a rheology-modifying agent.

15. Method for preparing a composition according to any of claims 1 to 14 wherein:
(i) a mixture is prepared comprising at least one binder and/or at least one aggregate and/or at least one additive,
(ii) at least one compound of formula (I) is added to the mixture obtained in (i),
or
a mixture is prepared comprising at least one compound of formula (I), at least one binder and optionally at least one aggregate and/or at least one additive,
or
(i) a mixture is prepared comprising at least one compound of formula (I) and at least one binder and/or at least one aggregate and/or at least one additive
(ii) a mixture is prepared comprising at least one binder and/or at least one aggregate and/or at least one additive
(iii) the mixture obtained in (i) is added to the mixture obtained in (ii).

16. Use of a composition according to any of claims 1 to 14 for the preparation of a cement grout, a mortar, a concrete, a spackle, a stucco, and/or a screed.

17. Use of a composition according to claim 16 for construction, building, concrete repair, the protection of concretes and steels against inclement weather or external attacks, waterproofing, anchoring, filling, sealing, gluing tiles or tile floorings, and facade cladding.
